# EUROPEAN PATENT APPLICATION

(11) **EP 0 711 628 A1**
(43) Date of publication of application: **15.05.1996**
(21) Application number: 95307818.5
(22) Date of filing: 02.11.1995
(51) Int. Cl.: B23K 35/02, H01R 4/02

(54) **Elongated conductor with solder ribbon flux core**

(30) Priority: 14.11.1994 US 340261
(71) Applicant: METHODE ELECTRONICS, Inc., Chicago, Illinois 60656-4549 (US)
(72) Inventor: Jensen, William T., Wayne, Illinois (US); Garritano, Mario, Oak Lawn, Illinois (US); Ingles, Gerald J., Big Rock, Illinois (US); Simons, Raymond B., River Forest, Illinois (US)
(74) Representative: MacGregor, Gordon

(57) **Abstract**

An elongated conductor is provided having a solder ribbon core which causes the internal flooding of the braid of the cable upon application of heat thereto. The volume of solder flooded throughout the braid may be controlled and uniformly dispersed via inserting a desired weight, thickness and width of the solder ribbon core.

## Description

### Field of the Invention

The present invention relates to an elongated conductor and, in particular, to an elongated conductor having a braid internally flooded with solder.

Conductors in ribbon form are common and are used in such applications as in automotive technology as part of a rear window defrosting grid or to provide power to the rear window stoplight. Such a device is disclosed in U.S. Patent No. 5,143,273. The '273 patent discloses a plurality of spaced masses of solder located along the elongated conductor which allow for the attachment of the conductor by application of heat at the specific locations of the solder masses. Such prior art methods have the disadvantage that they require additional steps and handling of the elongated conductor to adhere the solder thereto. Such application of solder masses requires the application of heat at the specified location, and mislocation of a heating element would result in the failure of the solder to be solidified.

It has also been known in the art to have an elongated conductor having a flooded braid. It was common to flood the braid of a cable by immersing the cable in a solder bath. Such a process can be referred to as an externally flooded braid because the solder bath is external to the braid prior to immersion. The prior art elongated conductors have the disadvantage that there is no specific way to control the amount or weight of solder which is adhered to the elongated conductor. Due to the nonuniform amounts of solder which are adhered to the elongated conductor upon application of a uniform amount of heat to adhere the elongated conductor to a surface, inadequate or excess amounts of solder are likely to be solidified causing either an inadequate connection of the conductor cable to the desired surface or a messy surface with excess flowed solder.

Accordingly, there is desired an elongated conductor having a controllable amount of solder therein.

It is an object of the present invention to provide an elongated conductor having solder incorporated into the conductor without an extra step following the braiding process.

It is a further object of the present invention to provide an elongated conductor having an even distribution of solder therein.

It is another object of the present invention to provide an elongated conductor which may be adhered to a surface by application of a hot element at any area along the elongated conductor.

It is a further object of the present invention to provide an elongated conductor which is quickly and easily manufactured.

### Summary of the Invention

In accordance with the above objectives, an elongated conductor is provided having a wire solder core inserted therein. A means for controlling the amount of the solder included within the elongated conductor is provided. The control means includes inserting a solder ribbon flux core of specified weight, thickness and width through the elongated conductor. The elongated conductor may include braided cable having multiple strands.

A method of forming an internally flooded braid includes the steps of braiding a cable and simultaneously including therein a solder ribbon flux core of desired weight, thickness and width. The step of inserting the solder ribbon flux core at the center of where the braided cable is formed so that the forming of the braided cable occurs around the solder wire forming a solder core is provided. The formation of a braided cable via a 24-carrier braiding machine is further provided. The method includes forming an internally cored braid and marking the braided cable at specified points with a hot knife to solidify the braided cable only at such designated points and separating the cable at the designated points. The method of forming an internally cored braid includes aligning the braided cable to a receiving surface and applying heat to the exposed surface of the braided cable at any area causing the solder core to melt, the solder core having flux.

Additional features and advantages of the present invention are described in, and will be apparent from, the detailed description of the presently preferred embodiments and from the drawings.

### Brief Description of the Drawings

Figure 1 is a side elevation view of an elongated conductor.

Figure 2 is an enlarged view of Figure 1.

Figure 3 is an end view of Figure 1.

### Detailed Description of the Preferred Embodiments

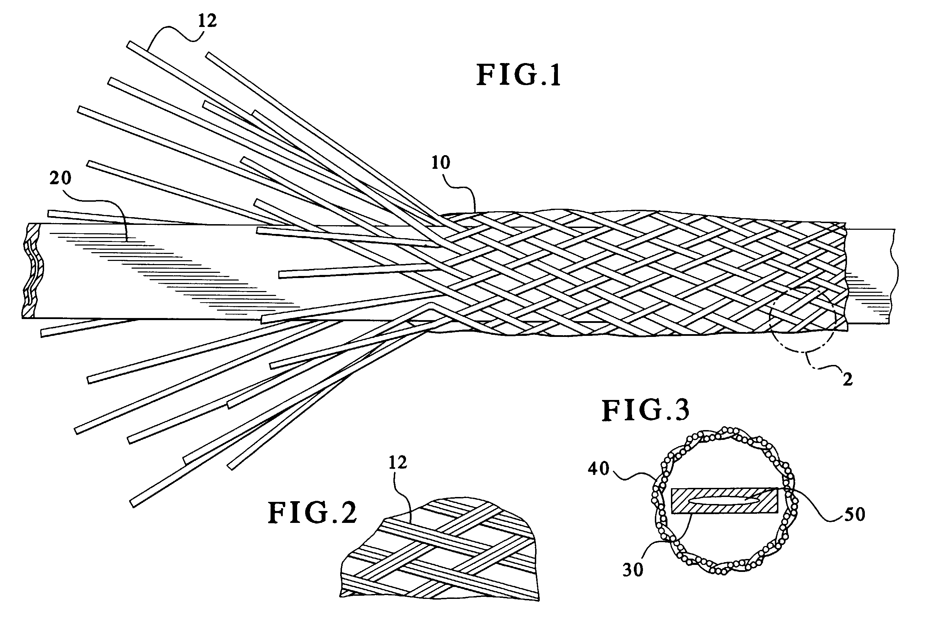

The present invention relates to an internally flooded braided cable as shown in Figure 1 having braided copper conductive cable 10 which is intended for use as a part for providing the carrying of current in a specified application. Solder ribbon flux core 20 is inserted therein and provides an elongated conductor having a solder ribbon core. By insertion of the solder ribbon core during the braiding process, the elongated conductor can be quickly and easily manufactured. The need of a later step to adhere the solder is eliminated. Further, the amount of solder which will be dispersed through the elongated conductor can be easily controlled by the weight, thickness and width of the solder ribbon which is inserted within the braided cable. In a preferred embodiment, a .032 inch by .150 solder ribbon flux core is inserted at the core during the assembly of a braided cable via use of a 24-carrier Wardwell braiding machine. Figure 1 shows the individual strands 12 of the cable during the braiding process. It was found that the use of such a solder ribbon flux core 20 provided for an evenly dispersed amount of solder throughout the braided cable 10. In a preferred embodiment, resistance soldering is applied at specific points along the cable 10 to melt the solder and adhere the cable to a receiving surface. In an alternative embodiment, the braided cable with solder ribbon flux core 20 may be run through heated rollers which cause the solder to solidify and to flood the braid internally. Such a braided cable having a solder wire core 10 of specified size and weight allows for a unified volume of solder dispersed throughout the braid.

Figure 2 shows an enlarged view of Figure 1 taken at circle 2. This enlarged view shows that in a preferred embodiment each strand 12 includes three individual wires. By use of a 24-carrier Wardwell braiding machine, a braided cable will comprise a cable made of 72 braided wires. However, any size, shape or number of wires in the braided cable are anticipated by this invention.

Figure 3 shows an alternative embodiment having a flat solder ribbon flux core 30 inserted at the core of a braided cable 40. The shape of the braided cable 40 having the flat solder ribbon flux core 30 was further flattened by controlling the shape of the rollers on the braiding machine to further flatten the cable 40. It is within the scope of the present invention to form a copper cable of any shape. This can be accomplished in a number of ways including the changing of the shape of the solder core or the rollers which form the braided cable and can include rounded, square or flat shapes among others. Flux 50 is present at the center of the solder ribbon flux core 30.

In a preferred embodiment, the internal flooding of the braided cable occurs simultaneously with the attachment of the elongated conductor to the receiving surface. The receiving surface is the rear window of an automobile to connect the power to the rear window defroster. The attachment of the elongated conductor to a receiving surface can occur by use of carbon rod resistance soldering or other methods. In such a use, a hot gun may be used and touched to the elongated conductor at any place and solidification of the solder will then occur to adhere the elongated conductor to the receiving surface. Due to the uniformly dispersed internally cored solder, the soldering iron or carbon rod resistance tip may be applied at any point. The internal flooded braid provides for a narrower solder joint than previously elongated conductors having solder buttons or externally flooded cables having too great of a volume of solder in a particular area due to the uncontrollable nature of the external flooded braid procedure or solder bath.

It should be understood that various changes and modifications to the presently preferred embodiments described herein will be apparent to those skilled in the art.

From the foregoing, it will be observed that numerous variations and modifications may be effected without departing from the spirit and scope of the novel concept of the invention. For example, instead of providing a solder core as shown in Figures 1 and 3, an individual strand 12 of the conductive cable 10 may be a solder strand providing for internal flooding of the cable via such a solder strand. Also, an alternative embodiment may be provided where the elongated conductor may be internally flooded just after the forming process of the braided cable. Such a method of manufacture can be quickly and inexpensively conducted by heating the cable via hot rollers or other means. It is also within the scope of this invention that prior to melting the solder, the ends of the braided cable may be solidified in order to provide a finished end portion so that the individual cable wires do not fray or unbraid during transport of the elongated conductor.

It is to be understood that no limitation with respect to the specific apparatus illustrated herein is intended or should be inferred. It is, of course, intended to cover by the appended claims all such modifications as fall within the scope of the claims.

## Claims

1. A braided cable having a solder ribbon core inserted therein.

2. The braided cable of Claim 1 wherein said solder ribbon core is variably determined based upon the required volume of solder required for adherence of the cable to a receiving surface.

3. A cable allowing for attachment to a surface via a controlled amount of solder comprising:
a braided cable having solder material included therein and a means for controlling the weight of said solder included therein.

4. The cable of Claim 3 wherein said control means includes inserting a solder ribbon core of a specified weight, thickness and width through said braided cable.

5. A method of forming an internally flooded braided cable including the steps of:
braiding a cable with a plurality of conductors and inserting therein a solder ribbon core.

6. The method of Claim 5 wherein said elongated conductor is solidified at specified points by applying heat thereto.

7. The method of Claim 5 wherein said braided cable is marked via a hot knife and separated at said mark.

8. The method of Claim 5 wherein said cable ends are solidified.
